Europäisches Patentamt

European Patent Office

Office européen des brevets

(19)

(11) Publication number: **0 076 103**
**A1**

(12)

# EUROPEAN PATENT APPLICATION

(21) Application number: **82305019.0**

(22) Date of filing: **23.09.82**

(51) Int. Cl.³: **G 01 N 21/27**
**G 01 N 21/59**

(30) Priority: **24.09.81 US 305062**

(43) Date of publication of application:
**06.04.83 Bulletin 83/14**

(84) Designated Contracting States:
**BE DE FR GB IT**

(71) Applicant: **SHERWOOD MEDICAL COMPANY**
**1831 Olive Street**
**St. Louis, MO 63103(US)**

(72) Inventor: **Eseifan, Ali Hasan**
**90, Randolph Avenue**
**South San Francisco California 94080(US)**

(74) Representative: **Wileman, David Francis et al,**
**c/o John Wyeth and Brother Limited Huntercombe Lane**
**South**
**Taplow Maidenhead Berkshire SL6 OPH(GB)**

(54) Optical analyzing method and system.

(57) A method and system for analysing specimens include
the turning on of an electric lamp (14) to produce a beam of
light on one side of a container (22) holding a specimen (26)
to be analysed. At least one signal proportional to the
transmittance of the specimen (26) is generated a predeter-
mined length of time after the lamp (14) is turned on, the
lamp (14) is turned off after the generation of the signal and
maintained off until the generation of a next successive
signal. Each transmittance signal is conveniently generated
an equal length of time after the lamp (14) is turned on and
may be used to determine a characteristic of the specimen
(26).

FIG. 1

EP 0 076 103 A1

Croydon Printing Company Ltd.

This invention relates to specimen analyzing systems and methods and more particularly to an improved optical analyzing method and system for detecting optical characteristics of liquid specimens.

In optical analyzing systems, light transmittance, optical density or absorbence and rate of change of transmittance or absorbence are detected to determine certain characteristics of liquid specimens. For example, in medical analyzers, a selected reagent is added to blood serum, and a change in light absorbence is determined in order to obtain an indication of blood clotting time. Tests for the concentration of creatinine in urine are made in a similar manner.

The light source used in optical detection systems has presented certain problems. For example, while it is desired to employ high intensity lamps, such as halogen lamps, because of their small size and low power requirements, such lamps have a relatively short life, for example, 60 hours of operation. Such lamps must therefore be replaced relatively often when such analyzers are used under typical clinical or laboratory operating conditions. This is an inconvenience and increases the overall cost of analyzing specimens. Also, the characteristics of the lamp are generally such that the light intensity of the lamp output increase to a relatively high mean value just after it is turned on and then continues to fluctuate for a considerable length of time thereafter. Thus, if light transmittance readings are taken while the light intensity of the lamp is varying, the readings or test results will be inaccurate since the light intensity of the source will be different for each reading or test. For these reasons, operating instructions accompanying some optical analyzers have recommended that the analyser be turned on for one hour or more before taking any optical test readings. This time allows the temperature and light intensity of the lamp to stabilise so that light transmittance readings for tests taken thereafter will be based on the same light intensity factor. In this way, the analyser can be calibrated on the basis of a given light intensity so that all tests thereafter will not vary due to variation in the light source.

However, turning the lamp on and maintaining it energised during the lamp stabilisation period and throughout the working day, shortens the effective operating life of the lamp, requires considerable energy, and produces a considerable amount of undesirable heat. Because of the heat generated by the lamp, heat sinks, cooling fans, and energy to run the fans are generally required, and these cause an increase in size and cost of the analyser.

Accordingly there is a need for an improved optical analysing method and system for detecting characteristics of a specimen which overcomes one or more of the above problems and allows considerable savings in energy, reduced heat dissipation, and increased lamp life.

- 4 -

In one aspect of the present invention, an improved optical analysing method and system for making tests on specimens includes, for each test, turning on an analyser lamp, generating at least one electrical signal proportional to the transmittance of the specimen a predetermined length of time after the lamp is turned on, and turning the lamp off before the next test.

Accordingly this invention provides a method of performing a plurality of optical tests for analysing characteristics of specimens comprising, for each test, the steps of turning on an electric lamp to produce a beam of light on a specimen, generating at least one electric signal proportional to the transmittance of the specimen a predetermined length of time after the lamp is turned on for use in determining a characteristic of the specimen, and turning the lamp off before the next successive test.

Preferably the predetermined length of time is substantially the same for the generation of each electric signal and may be for example less than 1 second. Preferably the predetermined length of time is less than one fifth of a second, e.g. between 100 and 160 milliseconds.

Preferably the lamp is turned off in less than one second after the lamp is turned on, most preferably after the generation of one signal. Preferably the lamp remains deenergised for a period so that the lamp temperature is substantially the same during each signal generation.

This invention also provides an optical analysing system for performing successive tests on specimens to determine characteristics of the specimens comprising a container for receiving a specimen; a high intensity electric lamp for directing a beam of light onto one side of the container; transducer means on the opposite side of the container for receiving light from the lamp passing through the container and a specimen in the container, and for producing an electric signal proportional to the transmittance of the specimen; means for turning the lamp on for each test of a specimen; means for generating a transmittance signal from the transducer means for each test a predetermined length of time after the lamp is turned on, means for turning the lamp off after each signal is generated and before the generation of a successive signal, and means for utilising the signal to determine a characteristic of the specimen.

Preferably the signal generating means generates the signal in less than one second after the lamp is turned on.

Conveniently the lamp is turned off in less than one second from the time the lamp was turned on during the generation of each signal and maintained off until the generation of the next successive signal.

These, as well as other objects and advantages of the invention, will become apparent from the following detailed description and accompanying drawing.

## Brief Description of the Drawing

Fig. 1 is a schematic diagram of a specimen analyzing device having an optical detection system in accordance with a preferred embodiment of the invention;

Fig. 2 is an example of a typical light intensity curve of a conventional high intensity lamp over a considerable period of continuous operation; and

Fig. 3 is a curve illustrating the energization cycle of the lamp of Fig. 1.

## Detailed Description of the Preferred Embodiment

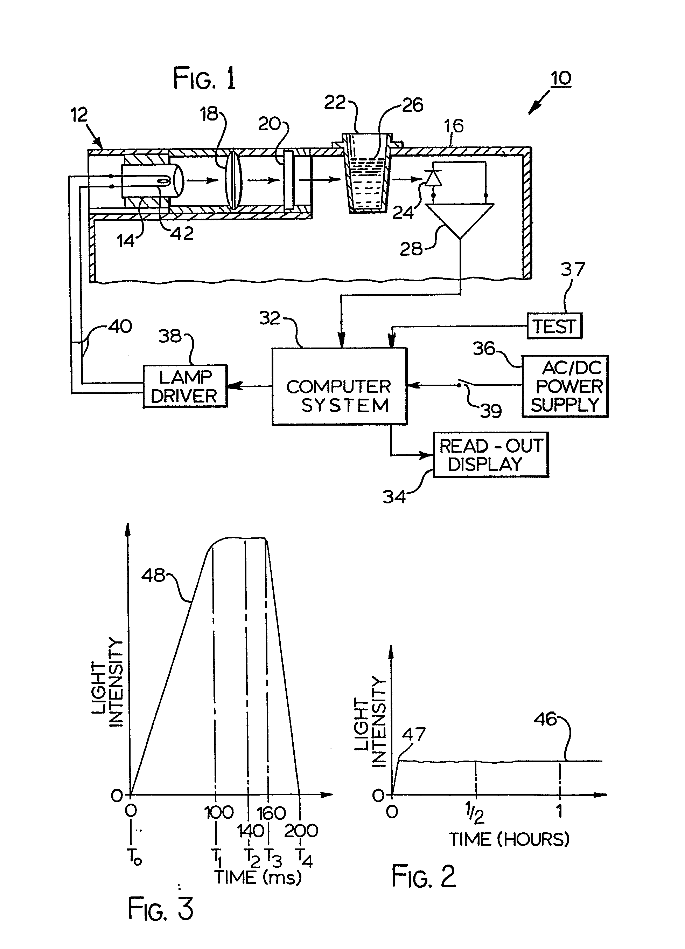

Referring now to the drawing and particularly to Fig. 1, an optical specimen analyzing system 10 is shown including an optical detection system or spectrophotometer 12.

The optical detection system 12 is diagrammatically shown including a light source illustrated as a lamp 14, such as a high intensity halogen lamp. Lamp 14 is mounted in a housing 16 to pass a beam of light (indicated by arrows) through a focusing lense 18 and a filter 20, and onto one side of a container or cuvette 22 of transparent material, such as a transparent plastic. A light transducer or light detector 24 is mounted in the housing 16 on the opposite side of the cuvette 22 for receiving light passing through the cuvette 22 and a liquid specimen 26 disposed in the cuvette. As is well known, the filter is chosen such that it passes wavelengths of light as determined by the particular optical characteristic of the specimen to be analyzed.

Detector 24 generates an electrical signal responsive to the light transmittance of the specimen 26. This signal is amplified by an amplifier 28 connected to the detector and is utilized to determine a selected characteristic of the liquid 26.

In the illustrated optical analyzing system 10, amplifier 28 is connected to a programmed computer system indicated at 32. A read-out display device 34 is shown connected to the computer 32 to indicate a test read-out or test result produced by the computer in response to input signals from detector 24. The computer system 32 is diagrammatically shown connected to be energized by an AC/DC power supply source 36 through a manual switch 39. A "test" switch 37 is shown connected to the computer system to start the programmed functions of the computer when it is desired to effect a test or optical analysis of the specimen 26. The computer system is shown connected to a voltage source or lamp driver 38 which is connected by electric leads 40 to the filament 42 of lamp 14 to control the energization of the lamp, that is, to turn the lamp "on" and "off".

The optical analyzing system of Fig. 1 may be used in the determination of characteristics of various liquids, for example, it may be used for the purpose of analyzing creatinine concentration in urine. In such case, a sample of a predetermined quantity of urine and a predetermined quantity of a suitable reagent, such as picrate, are mixed in cuvette 22. In such a test, two transmittance signals, taken at different times, are produced which may be converted by the computer system to optical density or absorbence values. The difference in absorbence values provides an indication of the change in absorbence and concentration of creatinine in the specimen. This change in absorbence may be compared to a change in absorbence of a standard or specimen of known creatinine concentration stored in the computer during calibration of the analyzer 10.

Fig. 2 illustrates a light intensity curve 46 of a high intensity lamp, such as lamp 14, that is, when operated continuously over a considerable period of time, as done in certain prior art analyzers. As indicated by the curve, when the lamp is turned on, the light intensity rapidly increases to a high intensity at 47 and, during continued continuous energization, fluctuates in intensity but generally not more than about 10% of the value indicated at 47. This fluctuating intensity may continue for more than 3/4 of an hour, as indicated in Fig. 2, and thereafter, the intensity stabilizes or is constant as indicated by the straight horizontal portion of the curve. Thus, in some analyzers now in use, it is necessary to allow the lamp to remain turned on for about an hour to insure that the light intensity of the lamp has stabilized.

In accordance with the present invention, a method of running tests for analyzing a characteristic of different specimens includes turning the lamp 14 on before the generation of each transmittance signal registered or utilized for specimen analysis, and then turning lamp 14 off before the next successive generation of a utilized transmittance signal or test is made. Each such signal is generated the same predetermined length of time after the lamp is turned on so that the light intensity of the light source will be the same for each signal generated. Fig. 3 illustrates a preferred portion of the light intensity characteristic curve 48 of lamp 14 that is utilized in the preferred method of running each test for determining a characteristic of a specimen, such as specimen 26. Each signal for each test is generated at the same relative time on the curve 48 as discussed hereafter.

The curve 48 illustrates the intensity-time curve characteristic of lamp 14 over a single testing period of analyzer 10 or period in which a transmittance signal is generated for specimen analysis. This period is indicated as being of 160 milliseconds (ms.) in duration and begins when the lamp is turned on at $T_0$. As seen by curve 48, the light intensity of lamp 14 rapidly increases until a time $T_1$. Time $T_1$ occurs 100 ms. after $T_0$ on the curve shown for illustration. The curve 48 thereafter varies to a lesser degree, for example, less that 10%. As will be explained more fully hereafter, a light transmittance signal utilized for analysis of the specimen liquid 26, is generated by detector 24 at a time $T_2$ or 140 ms. after the lamp 14 is turned on at $T_0$. The generated signal may be maintained to a time $T_3$ which is at about 160 ms. from $T_0$. At time $T_3$, the lamp is turned off or deenergized, and the light intensity rapidly decreases and reaches zero at a time $T_4$, 200 ms. after $T_0$. The entire lamp energization time for each test or for each transmittance signal utilized or stored for analysis is about 160 ms. or about 1/6 of a second. The curve 48 between $T_0$ and $T_3$ is the same (on an expanded scale) as the initial portion of the curve 46 of Fig. 2.

Each test performed on a given specimen may include the taking of more than one transmittance signal for analysis of the specimen, however, each time such signal is generated the lamp 14 is turned on and off as described above.

In operating the analyzer system 10, a sample, for example, a body fluid sample is placed in cuvette 16 and a suitable reagent is added to produce a mixed solution or specimen such as indicated at 26. With switch 39 closed, the "test" switch 37 is actuated to start the programmed operation of the computer 32, the computer turning on lamp driver 38 to turn lamp 14 on and energize filament 42. In the illustrated example, after the lamp has been turned on for 140 ms. at $T_2$ (Fig. 3), the computer system 32 accepts and stores a transmittance signal generated by detector 24 for use in providing a read-out at display 34 of a characteristic of the specimen. The programmed computer 32 turns the lamp 14 off at time $T_3$. The temperature of the filament 42 and light from the lamp decrease rapidly between $T_3$ and $T_4$. The lamp then cools substantially to ambient temperature in a short time, for example, 10 seconds. The lamp 14 is allowed to cool to the ambient temperature before being turned on for the next transmittance signal reading so that the same light intensity is obtained for each reading.

The computer system can be programmed to provide a reading corresponding to the absorbence of the specimen 26 or a change in absorbence or other functions related to the analysis of a characteristic of the specimen under test.

When the next successive test of a new specimen is run on the analyzer 10, the sample and reagent are mixed, and the "test" switch 37 again manually actuated. The computer 32 again turns on lamp 14 which was previously turned off just after the previous signal generation or test. At time $T_0$, the computer system 32 accepts a transmittance signal from detector 24 and amplifier 28. The computer again turns the lamp off at $T_3$. The value of the characteristic of the second specimen is read out on display 34.

Where more than one transmittance signal is used in a single test of a specimen, for example, where signals at different times are utilized to detect a change in the transmittance of the same specimen, the computer may be programmed to automatically run the test twice or obtain two signals without the necessity of actuating the "test" switch for the second signal. In such case, the detection of each of the utilized signals includes turning the lamp on at a time T and accepting or generating the utilized signal at a predetermined time after $T_0$, such as $T_2$, and then turning the lamp off just after taking the signal, such as at $T_3$.

In the example illustrated, the transmittance signal is taken at time $T_2$ which is 140 ms. after $T_0$. This ensures that the light intensity is near or at its maximum mean intensity for good detection. Turning the lamp off a short time after $T_2$, such as at $T_3$, or about 20 ms. after $T_2$, ensures that the electronic equipment has

-11-

time to store or request the desired optical detection signal.

Turning the lamp off just after generating a transmittance signal, such as at $T_3$, which is only about 160 ms. after $T_0$ in the above example, and maintaining the lamp deenergized until the next signal is to be generated, greatly conserves energy and increases the life of the lamp. A battery type supply system can advantageously be used because of the low power requirements of the lamp 14. Operating the lamp 14 in this manner also greatly reduces the heat generated as compared to a continuously energized lamp, and can eliminate the need of heat sinks, a cooling fan, and power to run the fan that are otherwise generally required with continuously operated lamps. With this method, no warm up or stabilization time is required since each test utilizes the initial portion of the characteristic curve of the lamp.

The specific times on the characteristic curve of the lamp during which the lamp is turned on and off, and at which the utilized transmittance signal is generated, may of course vary from those given in the illustrated example. Also, various lamps will, of course, have different light intensity-time characteristic curves.

It has been found that by starting each test from $T_0$, that is, with the lamp turned off, and taking or generating a transmittance signal used for analysis for each test at the same time after the lamp is turned on $(T_2)$, the light intensity or output of lamp 14 is same for each test or signal. Thus, without waiting (1 hour) for the lamp to stabilize, each test and transmittance reading will be based on the same light intensity factor. This, of course, allows the analyzer system to be calibrated on the basis of a given light intensity (e.g. at $T_2$) on the initial portion the characteristic curve (48) of the lamp.

Since the lamp is turned on and off for each test and the lamp is off between successive tests, the actual "on" time or energization time during a working day is very short. In the example method, the lamp filament is energized for 160 ms., less than 1/6 of a second. This, of course, greatly extends the operating life of the lamp compared to the case where an analyzer is operated with the lamp continuously on. For example, under the lamp operating conditions indicated in Fig. 3, if 150 tests were made during an eight hour working day, and each test required two transmittance readings, the total time that the lamp filament would be energized would be (2 x 150 x 160 ms.) 48 seconds. In constrast an analyzer requiring continuous lamp energization would be one hour of stabilization time and eight hours of operational use.

While the lamp energization time during the taking of each transmittance signal may be different from that indicated in Fig. 3, it is preferred that this time be less than one second so as to effect a significant savings in energy dissipation and a considerable increase in the life of the lamp. However, a considerable increase in lamp life and reduced energy requirements are obtained even if each transmittance signal requires 5 seconds or even one minute of lamp energization when compared to a continuously energized lamp.

The transmittance signal generally should be taken or registered at least 100 ms. after the lamp has been turned on, and preferably at least 120 ms. Also, it is preferred to take the signal . less than one second after the lamp is turned on.

By operating an optical analyzer in accordance with the above described method, the analyzer requires relatively lower power and readily permits the use of light weight and economical portable battery operated optical analyzers.

As various changes could be made in the above method and apparatus without departing from the scope of the invention, it is intended that all matter contained in the above description and apparatus shown in the accompanying drawing shall be interperted as illustrative and not in a limiting sense.

0076103

## CLAIMS

1.      A method of performing a plurality of optical tests for analysing characteristics of specimens comprising, for each test, the steps of turning on an electric lamp to produce a beam of light on a specimen, generating at least one electric signal proportional to the transmittance of the specimen a predetermined length of time after the lamp is turned on for use in determining a characteristic of the specimen, and turning the lamp off before the next successive test.

2.      A method as claimed in Claim 1 wherein the predetermined time is substantially the same for the generation of each electrical signal.

3.      A method as claimed in Claim 1 or Claim 2 wherein the predetermined time is less than one-fifth of a second.

4.      A method as claimed in Claim 1 or Claim 2 wherein the predetermined time is less than  one-fifth of a second.

5.      A method as claimed in any one of Claims 1 to 4 wherein the predetermined length of time is greater than 100 milliseconds.

6.      A method as claimed in Claim 1 or Claim 2 wherein the predetermined time is between 100 milliseconds and 160 milliseconds.

7. A method as claimed in any one of Claims 1 to 6 wherein the lamp is turned off in less than one second after the lamp is turned on.

8. A method as claimed in any one of Claims 1 to 6 wherein the lamp is turned off after the generation of each signal and less than one second after the lamp is turned on.

9. A method as claimed in any one of Claims 1 to 8 including the lamp to be deenergised after generating one electric signal before turning the lamp back on for generating the next successive signal so the the lamp temperature is substantially the same during each signal generation.

10. A method as claimed in any one of claims 1 to 9 wherein the lamp is maintained off between successive tests.

11. A method as claimed in any one of Claims 1 to 10 wherein the lamp is a high intensity gaseous electric lamp.

12. An optical analysing system for performing successive tests on specimens (26) to determine characterisitics of the specimens; comprising an electric lamp (14) for directing a beam of light onto one side of a container (22) holding a specimen; transducer means (24) on the opposite side of the container for receiving light from the lamp passing through the container and the specimen in the container, and for producing an electric signal proportional to the transmittance of the specimen; means for turning the lamp on for each test of a specimen;

means for generating a transmittance signal from the transducer means for each test a predetermined length of time after the lamp is turned on, means for turning the lamp off after each signal is generated and before the generation of a successive signal, and means for utilising the signal to determine a characteristic of the specimen.

13. A system as claimed in Claim 12 wherein the signal generating means generates the signal in less than one second after the lamp is turned on.

14. A system as claimed in Claim 12 or Claim 13 wherein the lamp is turned off in less than one second from the time the lamp was turned on during the generation of each signal and is maintained off until the generation of the next successive signal.

FIG. 1

FIG. 3

FIG. 2

0076103

# European Patent Office

## EUROPEAN SEARCH REPORT

EP 82 30 5019.0

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | DE - B2 - 2 649 746 (NATIONAL RESEARCH DEVELOPMENT CORP.) <br> * claim 1; column 1, lines 36 to 58; column 2, lines 12 to 64; fig. 1, 2 * <br> & US - A - 4 124 301 <br> -- | 1,2,5, 7-10, 12-14 | G 01 N 21/27 <br> G 01 N 21/59 |
| X | CH - A - 497 694 (FA. SKALAR) <br> * claim; subclaims 1, 2; column 1, line 21 to column 3, line 14; column 3, line 23 to column 4, line 19; fig. 1, 2 * <br> & US - A - 3 653 764 <br> -- | 1,2,9, 10,12 | |
| | | | **TECHNICAL FIELDS SEARCHED (Int.Cl. ³)** |
| X | DE - A1 - 2 851 931 (HARTMANN & BRAUN AG) <br> * claims 1, 2; page 4, lines 12 to 23; page 6, lines 16 to 19; page 7, lines 1 to 17; fig. 1, 4 * <br> -- | 1,2,9, 11,12 | G 01 N 21/00 |
| A | DE - A - 2 408 197 (WATERS ASSOCIATES INC.) <br> * claims 1, 8, 12; page 8, line 13 to page 9, line 11; fig. 2 * <br> & US - A - 3 810 696 <br> ---- | 1,12 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 15-11-1982 | HOFMANN |